# EUROPEAN PATENT APPLICATION

(11) **EP 4 559 980 A1**
(43) Date of publication of application: **28.05.2025**
(21) Application number: 22951364.3
(22) Date of filing: 22.07.2022
(51) Int. Cl.: C09C 1/46, C09C 1/48, C01B 32/205

(54) **PROCESS FOR OBTAINING ANODE-GRADE GRAPHITIC CARBON FOR BATTERIES FROM BY-PRODUCTS GENERATED FROM RECYCLED TYRES AND GRAPHITIC CARBON OBTAINED FROM THE PROCESS**

(71) Applicant: Sustrend Laboratorios SpA, Valparaíso, 7500000 (CL)
(72) Inventor: DÍAZ SOTO, Bernardita, Valparaíso. Valparaíso, 7500000 (CL); ANDREANI GONZÁLEZ, Dario, Viña del Mar, 7500000 (CL); BRITO SAAVEDRA, Germán, Valparaíso, 7500000 (CL); URRA RIQUELME, Nicolás, Valparaíso, 7500000 (CL); ROJAS CONTRERAS, Víctor, Valparaíso, 7500000 (CL); MUÑOZ GONZÁLEZ, Patricio, SANTIAGO, 7500000 (CL); NÚÑEZ GALEA, Viviana, Valparaíso, 7500000 (CL)
(74) Representative: Germain Maureau
(86) International application number: PCT/CL2022/050072
(87) International publication number: WO 2024/016090

(57) **Abstract**

More than one billion end-of-life tires (ELTs) are generated every year in the world. The tire industry is currently being forced to find ways to recycle these ELTs, due to the serious environmental pollution caused by their accumulation and the obligation to which it is subject in countries where extended producer responsibility laws for waste are advancing.

One of the most important processes in the world today for the recycling/recovery of tires is pyrolysis. This technology consists of a thermal treatment in the absence of oxygen that allows the decomposition of the tire into three by-products: pyrolytic oil (diesel), steel and recovered carbon black. The latter, unless it is subjected to post-treatment or has been obtained by a high-tech pyrolytic process, does not have sufficient technical quality to be marketed as a recovered raw material again in the industry, and is accumulating as a new tire waste.

To solve this problem surrounding used tires and the massive generation of recovered carbon black, the present development proposes an innovative physical-chemical process that allows the transformation of carbon black recovered from tires into graphitic carbon. Given the technical characteristics of the graphite obtained in the process, such as crystalline degree, nanometric particle size, spherical shape, high specific electrical capacity, among others, the product is also a candidate to be used as an anode in lithium-ion batteries, among other uses.

In general, the innovative process proposes using the recovered carbon black through several stages of: cleaning of the recovered carbon black; activation of the recovered carbon black; hydrothermal impregnation of catalyst in activated carbon of the recovered carbon black; graphitization of activated carbon of the recovered carbon black impregnated with catalyst; and finally, cleaning of graphite and recovery of catalyst.

## Description

### Field of Invention

This application discloses a product, process and use, whose objective is to transform carbon black waste derived from the recycling of tires, as well as other hard carbon from the industry, into a useful product. This development is applied in the field of tire recycling, in the chemical and electrochemical area, especially in the field of battery anode synthesis.

### Description of what is known in the field

In general, lithium-ion batteries (electric cars or energy storage) have cathodes and anodes, where the anodes for the batteries use a specific graphite for these purposes. For these anodes in lithium-ion batteries (LiBs), the graphite used is capable of storing 1 lithium atom for every 6 carbon atoms that make up the hexagonal network. From a more precise perspective, in the ion diffusion process, lithium is capable of intercalating between the different layers of graphene (1 atom thick) that make up the structural skeleton of graphite, as mentioned in J.T. Warner, Lithium-ion battery chemistries: A primer, 2019.

Commonly, to evaluate the electrical performance of a material, the specific capacity per mass of material present in the electrode (mAh g-1) is studied. The following Table I summarizes the capacity of the distinct types of carbon that can be used as anode material in lithium-ion batteries:

**Table I:**

| Carbon type | Specific Capacity (mAh g-1) | Volumetric Capacity (mAh cm-3) |
|---|---|---|
| Graphene | 960 | 4.284 |
| Hard Carbon | 480 | 553 |
| Natural Graphite | 372 | 837 |
| Synthetic Graphite | 342 | 369 |
| Soft Carbon | 255 | 293 |

| | | |
|---|---|---|
| Theoretical capabilities of several types of carbon used as anode material. | | |

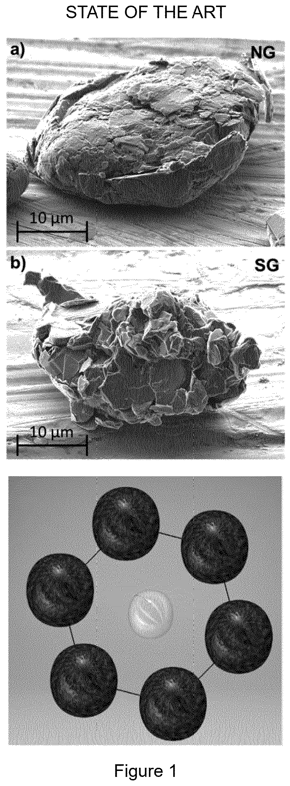

As shown in Table I above, there are two types of graphite that can be obtained artificially or from natural deposits. The first method is based on mixing high purity graphitizable carbons (e.g. petroleum coke and coal tar pitch), extrusion, repeated carbonization (baking at 800 - 1000 °C), pitch impregnation and finally graphitization at about 3000 °C for several weeks. The production of synthetic graphite is harmful to the environment because it requires a large amount of energy and, in addition, around 30-40% by mass of reactants such as gaseous species is lost, greatly increasing greenhouse gas emissions. Furthermore, the extraction and purification of natural graphite results in devastating environmental impacts on soil, water and air. Unlike coal, natural graphite is rarely found in veins, so it requires large-scale treatment including crushing, grinding and flotation to separate the graphite flakes from the rock. Acid leaching, including the large-scale use of HF, which is used to remove embedded minerals, has a huge environmental impact, as mentioned in Sustainable Chem. Eng. 2018, 6, 13199-13207. In both types of graphite, the particles are polycrystalline and are composed of numerous single-crystalline domains. In natural graphite, however, these domains are commonly oriented in the same direction, while their orientation in synthetic graphite is more random, as mentioned in Sustainable Energy Fuels, 2020, 4, 5387-5416. In fact, to obtain the spherical particle shape (also known as "potato shape") of the graphite used in LiBs, the originally flake-shaped natural graphite particles and the frequently randomly shaped synthetic graphite particles must undergo additional mechanical treatment after the extraction process, such as spheroidization described by M. Mundszinger, S. Farsi, M. Rapp, U. Golla-Schindler, U. Kaiser and M. Wachtler, Carbon, 2017, 111, 764 -773 and in figure 1.

The spheroidization process aims to homogenize the particle size (ideally, 8-30 µm) and morphology and therefore improve the packing density in the electrode coating layer for improved volumetric capacities. In the case of natural graphite, this modification of the morphology of the particles also makes it possible to avoid the orientation parallel to the current collector of the material in the form of flakes, which would hinder the rapid de/intercalation of lithium ions, as shown in the paper M. Yoshio, H. Wang, K. Fukuda, T. Umeno, T. Abe and Z. Ogumi, J. Mater. Chem., 2004, 14, 1754-1758.

Despite contributing positively to the performance of the materials, the graphite formation process causes a large loss of material, close to 70%, and high energy consumption due to the working temperatures. This is why other graphitization routes have been studied recently, where the catalytic route turns out to be quite interesting considering that the working temperatures are lower and the reuse of the catalyst in the process is like the one exposed in the present development.

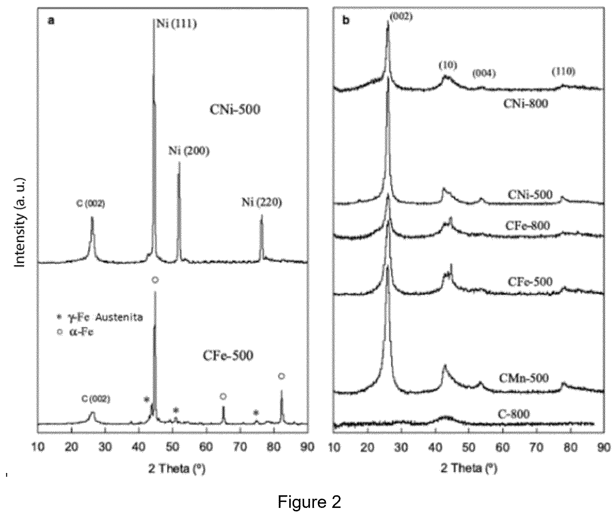

The present method is a simple synthetic strategy to prepare a carbon graphitic consisting of the carbonization of amorphous carbon precursors and/or hard carbons in the presence of certain transition metals (e.g. Fe, Co Ni, Mn) that act as graphitization catalysts. These metallic particles catalyze the conversion of amorphous carbon into graphitic carbon according to a dissolution-precipitation mechanism whose main advantage is that both graphitizable carbons and non-graphitizable carbons can be transformed into crystalline materials at moderate temperatures, less than or equal to 1000 °C. , preferably 1000°C, while conventional graphitization requires the use of graphitizable precursors and very high temperatures, greater than 2000°C, as pointed out by J. Phys. Chem. C 2007, 111, 9749-9756. Within this context, in Carbon 44 (2006) 468-474, it is indicated that graphitic porous carbons with a wide variety of properties were obtained using a silica xerogel as a template and a phenolic resin as a carbon precursor. The graphitization of the prepared carbons varies depending on the carbonization temperature used and the type of metal used as catalyst (Fe, Ni or Mn). The characteristics of these materials change a lot with the temperatures used during the carbonization stage, however, graphitization occurs positively when using the catalysts at different temperatures, as seen in Figure 2, since the signal at 28° (2q ) grows and sharpens, evidencing the formation of crystalline graphite. These graphitized carbons exhibited high electrical conductivities up to two orders of magnitude larger than those obtained for the non-graphitized samples.

On the other hand, document CARBON 49 (2011) 718-736 presents the preparation of porous graphitic carbons combined with chemical activation (ZnCl₂) with catalytic graphitization (Fe and Ni metals). ZnCl₂ activation agent increased the surface area of the porous carbon available for graphitization and the catalyst (Fe, Ni) accelerated the conversion process. With the increase of the heat treatment temperature (600 - 900 °C), the Fe and Ni metals satisfactorily promoted the degree of graphitization of the amorphous material. However, this document presents as a carbon precursor, a 'Mesophase Pitch', a type of carbon fiber. It is for this reason that only ZnCl is used as an activating agent.2, since this agent is usually used when the objective is to shape the pores of the activated carbon. Furthermore, given the characteristics of the precursor carbon, both the activating agent and the catalyst are mixed in a single step. In the case of the present development, given that carbon black is a carbon of high complexity and amorphicity, it is required to do the activation in an exclusive step, already through chemical activation with KOH or physical activation with high pressure steam. Furthermore, given the level of complexity of carbon black, for the impregnation of catalyst in the activated carbon particle, in the present development the use of hydrothermal impregnation is carried out, so that the catalyst particles are deposited in a controlled and nanoparticulate manner on the surface of the carbon and in the pores.

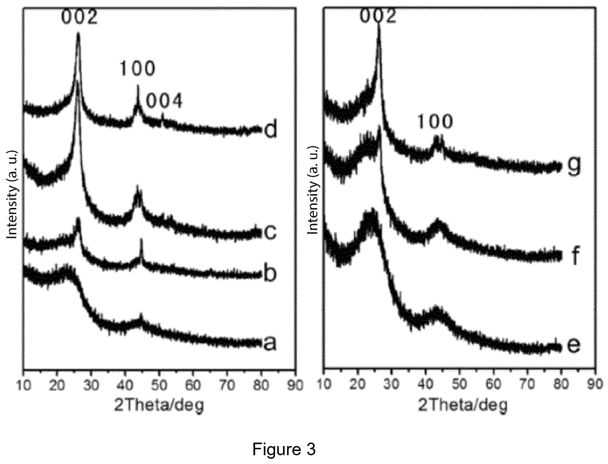

On the other hand, in the document Carbon 77, (2014), 215-225, an in situ hydrothermal deposition method is presented, applying it to load an iron catalyst in an amorphous carbon matrix, which was derived from a template method with sucrose as precursor, to prepare nanoporous graphitic carbon at low temperature. Compared with the traditional impregnation method, this hydrothermal loading method realizes the phase transformation from amorphous carbon to graphitic carbon at a temperature as low as 650°C, as seen in Figure 3. Systematic studies were conducted on the hydrothermal deposition and catalytic graphitization indicating that the temperature and duration of hydrothermal impregnation are the two crucial factors for the catalytic performance of loaded iron oxide. As the impregnation time and impregnation temperature increase, patterns are obtained a lot more crystalline. This is reflected in Figure 3, where it is seen that in the case of impregnation (a - d), the signals are much sharper at lower treatment temperatures than in the case of common calcination (e - g).

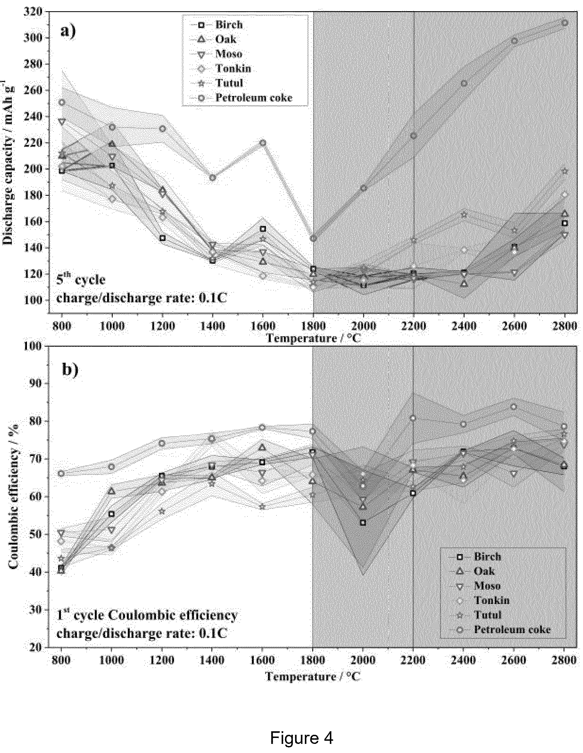

Taking all of the above into account, the opportunity arises to generate a process that allows giving high added value to out-of-use tires through the production and transformation of recovered black carbon of the amorphous type, into in a graphitic carbon, and can be used in energy storage devices (lithium ion batteries), as well as graphene precursor, lubricating powder, applications in conductive materials, refractory materials, among others, as its possible uses. From this point of view, various studies have focused on the use of amorphous carbons as precursors of graphitic carbons as anode materials in lithium ion batteries. The document Carbon 128 (2018) 147 - 163 reports a comprehensive and systematic study on the preparation and characterization of carbonaceous materials that are obtained from five sustainable precursor materials and petroleum coke as a reference material, focusing particularly on the correlation between the structural transformation of carbon precursors into graphitic material studying the temperature dependence of thermal treatment and its corresponding electrochemical characteristics as anode material in lithium ion batteries. For coals derived from biomass, they found a heterogeneous (discontinuous) graphitization process, that is, a transformation from the amorphous to the graphitic phase through the turbostratic phase. A general trend for the discharge capacity was observed, as presented in Figure 4, that is, a decrease in the specific capacity of the materials from 800 °C to 1800 - 2000 °C, followed by an increase in the capacity for temperatures higher than 2000 °C, evidencing the importance of graphitization temperature for non-catalytic processes. Furthermore, an increase in the Coulombic efficiency of the first cycle was found and is directly correlated with the decrease in the surface area of the "non-basal plane" with high temperatures.

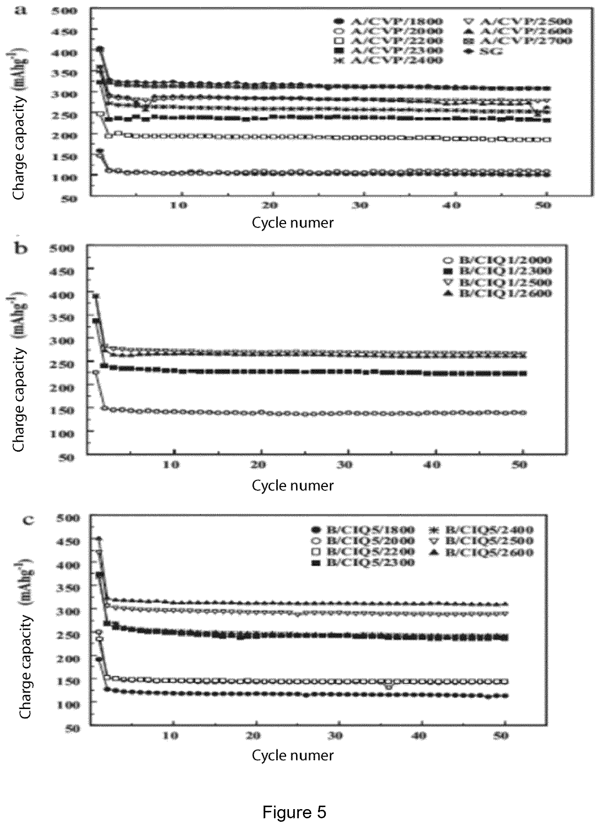

Also, in document J. Name., 2013, 00, 1-3, graphitic porous carbon materials were prepared in an ecological manner from Sterculia scaphigera residues. Characterizations by nitrogen adsorption/desorption, X-ray diffraction, Raman spectra and transmission electron microscopy indicated that the adsorption of water in the process plays a critical role in the development of abundant micropore architectures and a high specific surface area, as well as in promoting the degree of graphitization of the improved porous carbon obtained. Furthermore, porous carbon as prepared has been shown to have a superior electrochemical performance with a good combination of moderate capacity, extremely stable cycles and high Coulombic efficiency. In the document Carbon 77, (2014), 215-225, the behavior, as a negative electrode, in lithium-ion batteries of graphite-like materials that were prepared by high-temperature treatment of unburned carbon concentrates from fly ash was analyzed. coal combustion. The prepared graphite-like materials lead to reversible battery capacities of up to 310 mAh g- 1 after 50 cycles, these values were similar to those of reference graphite, as seen in Fig. 5. Furthermore, they showed a remarkable stability throughout the cycle and a low irreversible capacity. Apparently, both the high degree of crystalline and the irregular shape of the flakeless particles seem to contribute to the good anodic behavior of lithium-ion batteries made of these materials, making their use in this application feasible.

There are other documents that try to protect the reuse of carbon. On black, such as document CL 118-1997, where carbon blacks are used in the production of polymeric compositions with a primary particle size less than or equal to 25 nm. There are also other processes such as the one documented in patent CL 1534-1997 where a procedure is presented for the production of pressed or briquetted granules of carbon black pigments with adjuvant substances where: One or more carbon black pigments are mixed with a or various processability-promoting adjuvant substances; This mixture is then subjected to a pressing or briquetting stage; and this pressed or briquetted product is crushed; where the crushed product is separated into two or more fractions; finally the fraction in which at least 85% of the particles are between 80 and 2,000 µm, is extracted as a product and, if necessary, rounded in another stage; The other fraction or fractions are excluded from the process or recycled. In general, the previously mentioned processes do not focus on the low-temperature graphitization stages, nor on the specific products obtained, so they only see carbon black processing alternatives to give it some use.

Finally we can mention document CL 2051-2017, where a method is presented to produce graphite, which has a spacing of less than 0.34 nm because it includes the stages of heating by electromagnetic radiation of at least one of the excipients carbon, tar and biomass in the presence of a catalyst at a temperature greater than 1,000°C to produce graphite, wherein the catalyst catalyzes the conversion of at least one of carbon, tar and biomass into graphite, wherein the catalyst is introduced into at least one of carbon, tar and biomass by treating at least one of carbon, tar and biomass with an aqueous solution containing the catalyst; where the catalyst is selected from the group consisting of: a. a transition metal catalyst, wherein the catalyst is in ionic form and reacts with hydrochloric acid to form a chloride salt; b. a transition metal catalyst, wherein in ionic form it has a valency of less than three; c. iron (III) nitrate; d. nickel nitrate; and. chromium nitrate; F. chromium chloride; g. manganese acetate; h. cobalt nitrate; i. nickel chloride; or combinations thereof, and where the method is carried out in a graphitization reactor pressurized up to 30 [bar] and where the frequency of electromagnetic radiation is at a frequency between 13.56 MHz to 5.8GHz.

In general, this document is close to the present development, however, the starting products (excipients) based on carbon are completely different, while this patent application uses coal, tar and biomass, the present development uses recovered carbon black of tire, which is a completely non-uniform waste, that means that apart from the carbon black, it also contains metallic particles, rubber remains and highly sulfurized remains (result of the tire vulcanization process). On the other hand, the stages of the process are functional to the type of excipient to be degraded, this means that while the method of the document uses, as a first stage, heating by electromagnetic radiation, the present development is dedicated to cleaning and activating the carbon black before of his gratification with heat. This and other stages present substantial differences with respect to what is already known in the state of the art.

Other documents such as US 2011/0017493 which describes the formation of highly crystalline graphite microbeads, using hydrothermal carbonization (400-3000°C, preferably 400-1200°C) of biomass (matter with high oxygen content such as sugar, starch and alcohols) mixed with catalyst in aqueous solution (metal or metal-containing compound, preferably transition metal selected from Fe, Co, Ni, Ru, Rh, Pd, among others). The process includes hydrothermal carbonization and graphitization, at temperatures sufficient to carry out said stages, in which the heat contributed to the reactors can come from microwave treatment. An optional graphitization catalyst removal step is included. On the other hand, there is document CN 103193223 that discloses a method for forming hollow graphitized carbon spheres that comprises: a) dissolving a carbon source such as glucose or sucrose, metal salts and a metal catalyst (Fe, Co or Ni) in water deionized, transferring it to a hydrothermal reaction (100-300°C), and b) reducing the primary products at high temperature (500-3200°C) in a microwave oven. The Fe catalyst is removed using HCl. In both document examples, the excipient/substance Before The beginning is completely different from the present development, as are its stages.

There are a series of documents in the state of the art related to the generation of battery grade graphite from various sources, however, the improvements and differences achieved by this process are related to:
1. Find a new way to transform carbon black derived from tire recycling, and/or hard carbon, into a viable high-value product such as are the active materials for ion battery anodes.
2. Method to transform the low-quality carbon black product, with high composition variability, low porosity, contaminated with metals, sulfur and oils, and difficult to recyclable classification into battery grade graphitic carbon.
3. Low temperature catalytic gratification method with low energy consumption for carbon black derived from tire recycling.
4. Generate a graphitic carbon battery grade with nanometric size, high crystallinity, spherical and uniform.
5. Production of anodes with the graphite generated by this technique with a specific capacity close to or greater than the theoretical value, with high stability and a Coulombic efficiency over 95%.

### Detailed description of this development

It should be understood that the present development is not limited to the particular methodology, kits, compounds, compositions, formulations, combinations, materials, manufacturing techniques, uses and applications described here, as these may vary. It should also be understood that the terminology used here is used for the sole purpose of describing a particular representation and is not intended to limit the perspective and potential of the present development.

It should be noted that the kit, compound, composition, formulation, combination, piece, system, element, use and method, here, in the statement of claims and throughout the text that the singular does not exclude the plural, unless in the context clearly implies it. So, for example, the reference to a "use or method" is a reference to one or more uses or methods and includes equivalents known to those who know the subject (the art). Similarly, as another example, reference to "a step", "a stage" or "a mode", is a reference to one or more steps, stages or modes and may include sub-steps, stages or modes, implicit and /or supervening.

All conjunctions used are to be understood in their least restrictive and most inclusive sense possible. Thus, for example, the conjunction "or" should be understood in its orthodox logical sense, and not as an "exclusive or", unless the context or text expressly requires or indicates it. The structures, materials and/or elements described must be understood to also refer to those functionally equivalent and thus avoid endless exhaustive enumerations.

Expressions used to indicate approximations or conceptualizations should be understood as such, unless the context dictates a different interpretation.

All technical and/or scientific names and terms used here have the common meaning given to them by an ordinary person, qualified in these matters, unless otherwise expressly indicated.

Methods, techniques, elements, systems and parts similar and/or equivalent to those described may be used or preferred in the practice and/or testing of this development.

All patents and other publications are incorporated as references, for the purpose of describing and/or reporting, for example, the methodologies described in said publications, which may be useful in relation to the present development.

These publications are included only for their information prior to the registration date of this patent application.

In this regard, nothing should be considered as an admission or acceptance, rejection or exclusion, that the authors and/or inventors are not legitimate to be so, or that said publications are pre-dated by virtue of previous ones, or for any other reason.

A couple of concepts applied in this development are based on the definition of the terms:
Carbon Black or Recovered Carbon Black (rCB): corresponds to a carbon product that is obtained from the pyrolysis of out-of-use tires or other rubbers. industrial. It is a highly variable product in its composition due to the metal and oil residues it contains, depending on the used tire raw material and pyrolysis process conditions. In addition, it includes a high amount of sulfur derivatives resulting from the tire vulcanization process. As an example, Table II is presented, which shows the high variability and dirtiness of carbon black components from different industrial tire pyrolysis plants, the main excipient of the present invention. Table II is separated into two parts, table Ila that presents some physicochemical characteristics of Carbon Black recovered from real samples analyzed and table IIb that presents the variable chemical composition of Carbon black recovered from real samples analyzed.

**Table Ila:**

| Studied parameter | Recovered Carbon black n°1 | Recovered Carbon black n°2 | Recovered Carbon black n°3 | Recovered Carbon black n°4 | Recovered Carbon black n°5 |
|---|---|---|---|---|---|
| D1510-19: DETERMINACION OF IODINE INDEX | 46,29 ± 0,42 g kg⁻¹ | 15,37 ± 1,06 g kg⁻¹ | 37,72 ± 3,01 g kg⁻¹ | 56,90 ± 0,38 g kg⁻¹ | 82,17 ± 0,38 g kg⁻¹ |
| D1509-18: HEAT LOSS, PERCENTAGE OF HUMIDITY | 2,19 ± 0,01 % | 2,65 ± 0,11 % | 1,20 ± 0,02 % | 1,49 ± 0,21 % | 0,31 ± 0,05 % |
| D1512-15B: pH DETERMINATION | 8,55 ± 0,01 | 8,37 ± 0,17 | 8,39 ± 0,20 | 8,36 ± 0,03 | 8,13 ± 0,03 |
| D1506-15: DETERMINATION OF ASH PERCENTAGE | 12,44 ± 0,14 % | 12,44 ± 0,14 % | 19,09 ± 0,39 % | 1,48 ± 0,11 % | 15,57 ± 0,16 % |
| D1513-05: DENSITY DETERMINATION | 465 ± 0,1 kg m⁻³ | 784 ± 2 kg m⁻³ | 579 ± 2 kg m⁻³ | 406 ± 2 kg m⁻³ | - |
| D4527-18 DETERMINATION OF SOLVENTS | 20,07 ± 0,07 % | 45,18 ± 0,04 % | 33,21 ± 0,12 % | 12,01 ± 0,13 % | 0,03 ± 0,02 % |
| NSA | 81,4557 m² g⁻¹ | 59,0508 m2 g-1 | 59,6837 m2 g-1 | 71,6209 m2 g-1 | - |
| Pore Size | 31,4768 nm | 41,6968 nm | 37,3900 nm | 29,7889 nm | - |
| Average discharge capacity | 20,5 mAh g⁻¹ | 15,6 mAh g⁻¹ | 18,3 mAh g⁻¹ | 23,1 mAh g⁻¹ | - |
| Average charge capacity | 20,3 mAh g⁻¹ | 15,2 mAh g⁻¹ | 17,8 mAh g⁻¹ | 22,6 mAh g⁻¹ | - |

| | | | | | |
|---|---|---|---|---|---|
| * This measurement corresponds to the amount of polluting oil extracted from carbon | | | | | |

**Table IIb:**

| ELEMENT | rCB 1 | rCB 2 | rCB 3 | rCB 4 |
|---|---|---|---|---|
| CARBON | 82 ± 0,46 % | 93,79 ± 0,35 % | 91,05 ± 1,16 % | 90,62 ± 1,45 % |
| OXYGEN | 13,46 ± 0,78 % | 3,65 ± 0,96 % | 6,19 ± 0,92% | 7,22 ± 1,57% |
| ALUMINUM | 0,03 ± 0,02 % | 0,06 ± 0,02 % | 0,17 ± 0,08 % | 0,06 ± 0,01 % |
| SILICON | 2,96 ± 0,33 % | 0,82 ± 0,10 % | 0,84 ± 0,10 % | 0,72 ± 0,10 % |
| SULFUR | 0,80 ± 0,12 % | 1,34 ± 1,00 % | 0,90 ± 0,19 % | 0,64 ± 0,12 % |
| POTASSIUM | 0,03 ± 0,01 % | 0,04 ± 0,03 % | 0,04 ± 0,02 % | 0,02 ± 0 % |
| CALCIUM | 0,01 ± 0,01 % | 0,10 ± 0,03 % | 0,09 ± 0,01 % | 0,12 ± 0,05 % |
| IRON | n.d | 0,04 ± 0,03 % | 0,07 ± 0,05 % | 0,12 ± 0,05 % |
| ZINC | 0,72 ± 0,14 % | 0,62 ± 0,24 % | 0,66 ± 0,20 % | 0,45 ± 0,09 % |
| CHLORINE | n.d | 0,01 ± 0,01 % | n.d | 0,01 ± 0,01 % |
| MAGNESIUM | n.d | 0,02 ± 0,02 % | n.d | 0,02 ± 0,02 % |
| COPPER | n.d | 0,03 ± 0,03 % | n.d | n.d |

| | | | | |
|---|---|---|---|---|
| n.d. undetermined. | | | | |

The present development presents a process by which the recovered carbon black is transformed into graphitic carbon, with high crystallinity, nanometric, high porosity, uniform and spherical.

Hard carbon: carbon material semi-graphitizable obtained with treatment below 1500 °C. Hard carbons are characterized by atomic structures that consist of stacks of graphene layers with interlayer spaces ranging from 3.4 to 4 Å, large enough to accommodate lithium ions. Furthermore, the morphologies of hard carbon are porous, wire-shaped or microsphere-shaped, generally inherited from the precursor materials, this type of carbon material does not come from natural sources, it is of industrial and/or synthetic origin.

Anodic grade graphitic carbon for lithium ion battery: Graphitic carbon with a morphology of spherical particles, with particle size less than 500 µm, specific electrical capacity greater or equal to 360 mAh g-1 and efficiency greater or equal to 93%.

Coulombic Efficiency: Efficiency is the energy released during discharge divided by the energy stored during charge. It is usually expressed in percentage values.

Sphericality of graphitic carbon: Type of morphology of graphitic carbon in the form of a sphere that allows better electron transfer, better compaction on the current collector, better wettability in aqueous solvents, better intercalation of lithium ions and an increase in the volumetric capacity of the material. Furthermore, the spherical shape makes it possible to avoid the orientation parallel to the current collector of the flake-shaped material, which would hinder the rapid de/intercalation of lithium ions.

Determination of iodine value: It is used as an indirect marker of surface area. The iodine expenditure in the analysis is in direct proportion to the surface area that covers or is capable of absorbing the carbon.

Specific capacity of graphitic carbon: Describes the amount of electrical charge per gram of material that a power source can deliver under specific discharge conditions. It depends on the discharge current, cut-off voltage, temperature and the type and amount of active materials. The unit is Ah g-1.

Cyclability: Study carried out on batteries to determine the stability of the material over time. Specific capacity is generally quantified as the number of charge/discharge cycles increases.

T-Phite or T-Phite graphite refers to the product of the actual development, corresponding to a graphitic carbon or hard carbon.

The process consists of the following stages:

### 1) Cleaning of recovered black carbon (rCB).

The cleaning of the recovered black carbon is separated into two sub-stages, which meet the objective of: eliminating contaminating metals and then eliminating organic residues.

Substage 1: The carbon black is mixed in a 1:10 ratio with 4 M HCl and left stirring for 6 hours and treated with constant ultrasound. The product is filtered and neutralized with 1 M NaOH solution and deionized water.

This first cleaning substage allows removing metallic impurities such as Zn and Fe, coming from the tire.

Substage 2: Once this process is finished, the clean CB is mixed with an organic solvent, preferably acetone (or toluene), in a 1:10 ratio at 40°C, which is stirred for 2 hours. It is subsequently filtered and washed with acetone again, to remove as much organic contaminants as possible. The resulting material is dried in an oven and stored until later used. This second substage, in cleaning, allows the removal of oil contaminants that are retained in the carbon, coming from the tire pyrolysis process.

### 2) Activation of clean recovered black carbon.

The activation process can be carried out by chemical (a) or physical (b) means. Chemical activation a) consists of mixing rCB with an alkaline or acidic activating agent, such as H₃PO₄, H₂S, H₂SO₄, H₂SO₃, KOH, NaOH, LiOH, preferably KOH or H₃PO₄, without excluding other initiators of the same nature. The weight ratio is 1:1 and the mixture are made dry; for this, it is subjected to a joint grinding process. The rCB and, for example, the KOH are added for a range of between 5 to 60 seconds, preferably 20 seconds in a mechanical grinding mill in order to homogenize and grind at 26,000 rpm. Then, the mixture is subjected to heat treatment in a muffle between 600-900°C, preferably 800°C for 0.5-3 hours in an inert atmosphere, preferably nitrogen, at a heating ramp of 5°C per minute. After that, the activated carbon (CBa) sample is washed with a strong acid, preferably 4M HCl for 2 hours, assisted with ultrasound, then filtered and washed with deionized water and dried in an oven at 110°C. for 30 minutes.

Failing that, physical activation (b) is developed through heat treatment in a muffle up to 800°C for 1 hour, with a constant flow of water vapor in an inert atmosphere, preferably nitrogen or argon.

Obtaining this activated carbon allows us to have carbon particles with greater porosity and thus greater surface area, as well as the formation of oxidized functional groups on the surface, within which we can mention hydroxyl groups, carbonyls, ethers and carboxylates. Both qualities help the efficient incorporation of the catalyst in the next stage of the process.

### 3) Hydrothermal impregnation of the catalyst in the activated rCB.

The impregnation of the catalyst into the rCB activated carbon particles is carried out through hydrothermal treatment. The carbon is mixed with an aqueous solution of between 0.01 to 0.25 M of the catalyst, selected from (Ni(NO₃)₂, Fe(NO₃)₃, Co(NO₃)₂, NiCl₂, FeCl₃, CoCl₂) and is taken to a steel hydrothermal reactor with an internal Teflon jacket, with pressure resistance of up to 6MPa for 1 to 12 hrs at a temperature between 100 to 160 °C. After treatment, the carbon was filtered with a paper filter with a pore size between 1 and 50 µm. It was subsequently dried in an oven at 125°C. The catalyst stock solution is recovered to be reused in the following batches.

### 4) Graphitization of rCB activated carbon impregnated with catalyst.

The carbon previously impregnated with catalyst is introduced into a muffle furnace in an inert atmosphere, such as nitrogen, helium and/or argon, and thermally treated at a temperature of between 800 and 1500 °C for between 3 and 10 hours, using a temperature ramp of between 1 to 5 °C per minute to reach the treatment temperature, using a constant flow of N₂ o Ar.

### 5) Cleaning graphitic carbon with catalyst recovery.

The graphite is mixed in a 1:10 ratio with a strong acid, preferably 4 M HCl, and left stirring for 6 hours and treated with constant ultrasound, for leaching and removal of the catalyst. The product is passed through a filter with a pore size between 1 - 50 microns and neutralized with a strong alkali solution, preferably 1 M NaOH and deionized water. Finally, the clean graphitic carbon is dried at 125°C and subsequently taken to a ball mill to reduce the particle size. The powder obtained was sieved with meshes between 20 and 270 mesh for use in the manufacture of anodes for lithium-ion batteries. The leachate solution is reserved for catalyst recovery.

Another objective of the following development is to intellectually protect the clean graphitic carbon obtained with my product of this process. A summary of the main physical and chemical characteristics is shown below in Table IX.:

**Table IX:**

| ELEMENT | Range |
|---|---|
| CARBON | 85 - 99 % |
| OXYGEN | 0,1-10% |
| SILICON | 0,01 - 1,5 % |
| POTASIUM | 0,01 - 0,15 % |
| NICKEL | 0,07 - 1,9 % |
| SULPHUR | 0,01 - 0,05% |
| Studied parameter | |
| D1510-19: Determination of iodine index | 220 g kg-1 - 280 g kg-1 |
| Particle size | 30 nm - 40,5 nm |
| Degree of crystallinity | 55% - 90% |

| | |
|---|---|
| Nanospheres; 100% X-ray diffraction (XRD) method Pick at 25.92, 2e. | |

### Description of the figures

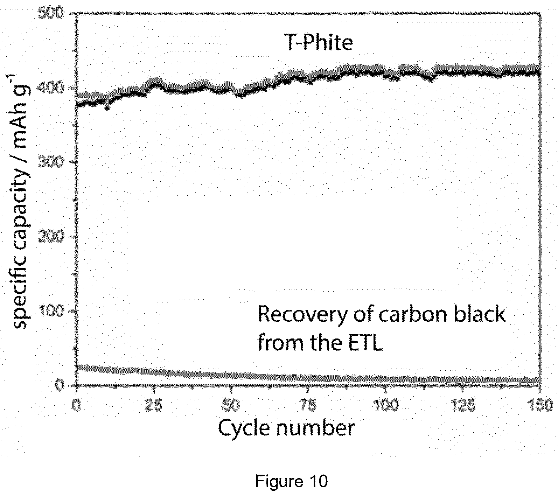

Figure 1/10 Figure 1, at the top, corresponds to a comparison of scanning electron microscope (SEM) micrographs of sphere-shaped natural graphite (NG; after several processing steps) and synthetic graphite (SG). At the bottom there is a diagram of how the lithium ion is positioned between 6 carbon atoms that make up the hexagonal structure of the graphene planes.
Figure 2/10 Figure 2 presents 8 diagrams of the state-of-the-art Carbon 44 (2006) 468-474 X-ray diffraction patterns of a) with catalyst and b) after removal of the Nickel catalyst used in the process. Specifically, it is seen that the graphitization of the prepared carbons varies depending on the carbonization temperature used (500 and 800°C) and the type of metal used as catalyst (Fe, Ni or Mn). The characteristics of these materials change a lot with the temperatures used during the carbonization stage, however, graphitization occurs positively when using the catalysts at different temperatures, since the signal at 28° (2q) grows and sharpens, evidencing the formation of crystalline graphite. The red rectangles indicate the appearance and disappearance of the catalyst, in this case Nickel.
Figure 3/10 This figure presents the state of the art Carbon 77, (2014), 215-225, where a comparison is shown with the traditional impregnation method, where the phase transformation from amorphous carbon to graphitic carbon is carried out at a temperature as low as 650°C. Studies on hydrothermal deposition and catalytic graphitization are also shown, indicating that the temperature and duration of hydrothermal impregnation are the two crucial factors. As the impregnation time and impregnation temperature increase, much more crystalline patterns are obtained. This is reflected in this figure, where it is seen that in the case of impregnation (a - d), the signals are much sharper at lower treatment temperatures than in the case of common calcination (e - g).
   On the other hand, this figure shows the X-ray patterns of the final product derived from the hydrothermal impregnation method (a - d); common method of wet impregnation (e - g) and calcination at (a) 600 °C, (b) 650 °C, (c) 700 °C, (d) 900 °C, (e) 700 °C, (f) 800 °C and (g) 900 °C.
Figure 4/10 This figure also shows a comparative graph of the state of the art Carbon 128 (2018) 147 - 163, where a general trend is seen for the discharge capacity, that is, a decrease in the specific capacity of materials, such as, birch, oak, moso, pumpkin, tutul and coke charcoal, from 800 °C to 1800 °C - 2000 °C, followed by an increase in capacity for temperatures above 2000 °C, evidencing the importance of the graphitization temperature for non-catalytic processes. Furthermore, an increase in the Coulombic efficiency of the first cycle was found and could be directly correlated with the decrease in the surface area of the "non-basal plane" at high temperatures.
   The results of:
   (a) the discharge capacities at a charge/discharge rate of 0.1C (each from the fifth cycle), and
   (b) Coulombic efficiencies in the first cycle for lithium-ion insertion/disinsertion into carbonaceous anode materials in relation to graphitization temperature.
Figure 5/10 This figure shows diagrams of the state-of-the-art Journal of Power Sources 196 (2011) 4816-4820, where the behavior as a negative electrode in lithium-ion batteries of materials similar to graphite that were prepared by high temperature treatment of concentrates was studied. unburned carbon from fly ash from carbon combustion. The prepared graphite-like materials lead to reversible battery capacities of up to 310 mAh g- 1 after 50 cycles, these values were similar to those of the reference graphite. Furthermore, they showed remarkable stability throughout the cycle and a low irreversible capacity. Apparently, both the high degree of crystallinity and the irregular shape of the flakeless particles seem to contribute to the good anodic behavior of lithium ion batteries made of these materials, making their use in this application feasible.
   Graph (a) represents: The behavior of samples A/CVP/1800-2700 during 50 charge/discharge cycles at a speed of C/10 in a half cell using lithium as a counter electrode. These samples correspond to unburned carbon samples from fly ash from pulverized carbon combustion. Specifically, these samples were filtered below 80 microns. Subsequently, the samples were treated at temperatures of 1800 - 2000 - 2200 - 2300 - 2400 - 2500 - 2600 and 2700 °C. For comparison, the corresponding behavior of petroleum-based synthetic graphite (SG) is included as a reference.
   Graph (b) represents: The behavior of samples B/CIQ1/2000- 2600 during 50 charge/discharge cycles at a speed of C/10 in a half cell using lithium as a counter electrode. These samples correspond to unburned carbon samples made from fly ash from pulverized carbon combustion and subsequently agglomerated with residual vegetable oil at 1% by weight. Then the samples were treated at temperatures of 2000 - 2300 - 2500 and 2600 °C.
   Graph (c) represents: The behavior of samples B/CIQ5/1800- 2600 during 50 charge/discharge cycles at a speed of C/10 in a half cell using lithium as a counter electrode. These samples correspond to unburned carbon samples made from fly ash from pulverized carbon combustion and subsequently agglomerated with residual vegetable oil at 5% by weight. Subsequently, the samples were treated at temperatures of 1800 - 2000 - 2200 - 2300 - 2400 - 2500 and 2600 °C.
   Of the samples mentioned above, only some materials synthesized from the unburned carbon concentrates, namely samples A/CVP/2700 and B/CIQ5/2600, provided capacities similar to the reference graphite (SG) (Approximately 310 mAh g-1). However, all samples present stable capacities throughout the cycles with efficiencies between 90 and 99% after 50 charge/discharge cycles.

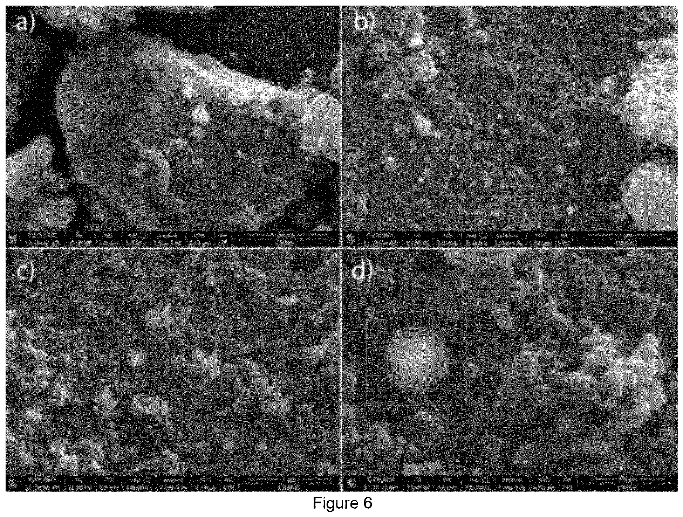

Figure 6/10 This figure shows 4 magnifying micrographs from a) to d), by the Scanning Emission Electron Microscopy technique. In the gray square you can clearly see the area that increases until reaching a graphite particle. of the present development in the shape of a nanosphere and with a size in the range of 30 to 50 nanometers.

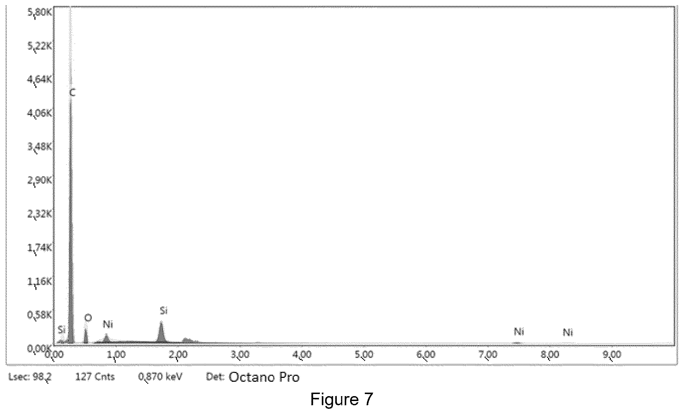

Figure 7/10 Figure 7 presents an analysis of the composition by EDX of a graphitic carbon particle of the present development, which is described in table IV.

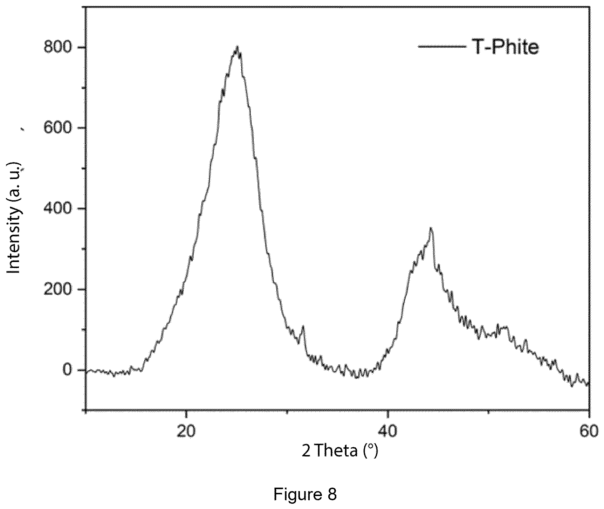

Figure 8/10 Figure 8 presents an X-ray diffractometry of a sample of the graphitic carbon of the present invention treated at 1000°C for 12 hours. Here you can clearly see a characteristic peak of carbon-based materials at 25.92 degrees (2e) and some signals corresponding to crystalline traces of the catalyst used in the contamination reaction at 44.5 degrees (2e).
   The black asterisk shows the graphitic carbon and the gray asterisk shows the crystalline traces of the catalyst.

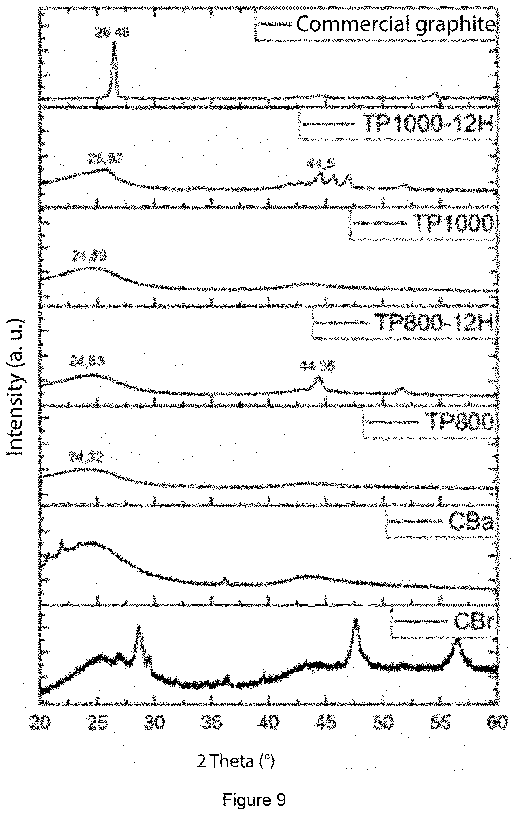

Figure 9/10 Figure 9 presents a comparative table of different X-ray diffractograms of different intermediate products from various stages of the process of the present development and a commercial graphite.
Figure 10/10 Figure 10 presents a diagram of the electrochemical performance of the button-type cell (half cell), where you can clearly see, in the upper part, two curves, in black, the behavior of the graphite of the present development electrochemically, in gray, the behavior electrochemical behavior of a commercial graphite, and in the lower curve the electrochemical behavior of black carbon recovered without treatment.

The examples described below of the present method and product are for purely illustrative purposes and are not intended to limit the present development.

### Application example:

10 g of carbon black (rCB) were taken, cleaned of metallic and organic contaminants, with 4 M HCl in a 1:10 ratio and left for 6 hours under magnetic stirring and through constant ultrasound treatment. The product was filtered with a paper filter with a pore size between 1 and 50.mm and was neutralized with a solution of 1 M NaOH and deionized water. Once this process is completed, the rCB is mixed with acetone, in a 1:10 ratio at 40°C, which is stirred for 2 hours. Subsequently, it was filtered with a paper filter with a pore size between 1 and 50.mm and washed with 30 mL of acetone again, to remove as much organic contaminants as possible. The resulting material is dried in an oven at 125°C for 1 hour at constant weight, and stored until later use.

The clean and dry rCB was mixed with KOH in a 1:1 ratio on dry basis, and subjected to a co-grinding process. In the laboratory, it was carried out in a Lab Mill model FW200 grinding equipment, where rCB and KOH were added for 20 seconds in order to homogenize and grind. Then, the mixture is subjected to heat treatment in a muffle at 800°C for 1 hour in atmosphere inert nitrogen at a ramp heating at 5°C per minute to carry out the activation process, and a cooling time of 160 minutes, for a total of 380 minutes. After that, the activated carbon (aCB) sample obtained was washed with 4M HCl for 2 hours assisted with ultrasound, then filtered with a paper filter with a pore size between 1 and 50.mm, washed with deionized water and dried in an oven at 110°C for 30 minutes.

The activated carbon obtained (5.5 grams) was impregnated with catalyst mixing with 10-150 mL of a 0.25 M aqueous solution of Ni(NO) catalyst3)2 and it was taken to a hydrothermal reactor (steel reactor with a 100mL Teflon internal jacket, with pressure resistance up to 6MPa) to a thermal treatment for 12 hrs at a temperature of 140 °C. After treatment, the carbon was filtered with a paper filter with a pore size between 1 and 50.mm, and dried in an oven at 120°C for 1 hour until constant weight.

The carbon previously impregnated with catalyst was introduced into a muffle furnace with nitrogen atmosphere control and was thermally treated at a temperature of 1000 °C for 10 hours, using a temperature ramp of 5 °C per minute to reach the temperature treatment, using a constant flow of N₂ o Ar.

Finally, the graphite obtained was mixed in a 1:10 ratio with 4 M HCl and left stirring for 6 hours at 2000 rpm and treated with constant ultrasound at 60 hrz, for leaching and removal of the catalyst. The product was filtered with a paper filter with a pore size between 1 and 50.mand neutralized with 1 M NaOH solution and deionized water. The final clean graphitic carbon was dried at 125°C and 4.8 g of graphitic carbon was stored in a glass jar until use.

With the clean Graphitic Carbon, different tests were carried out to verify:
a) Indirect surface area by iodine value
b) Particle size
c) Composition analysis
d) Degree of Crystallinity
e) Electrochemical performance button cell, half cell

### a) Surface area

For the first test, 0.5 g of the recovered black carbon, 0.25 g of activated black carbon and 0.25 g of clean graphitic carbon were taken, which were added to separate glass vials, and the determination of the index of iodine as follows: 25 mL of 0.04728 N I solution was added2 into the glass vial containing the sample and capped immediately. The vial was placed in a mechanical shaker and shaken for 1 minute at 240 strokes/min (Strokes/min). It was immediately placed in a centrifuge at 4000 rpm for 10 minutes. Subsequently, 20 mL of the resulting solution was taken and titrated. with 0.0394 N sodium thiosulfate using 1% starch as indicator, with this determined the indirect surface area of the different types of carbons as presented in the table III.

**Table III**

| | rCB | | aCB | | Graphitic carbon | |
|---|---|---|---|---|---|---|
| Iodine value (ppm) | 56,90 | +/- 0,38 | 111,97 | +/- 0,63 | 225,76 | +/- 0,81 |

This measurement clearly shows the increase in contact surface as you move towards the final product.

### b) Particle size

To analyze this technique, 1 mg of graphite sample of the present development was taken. For this purpose, a graphite film of the present development was added on a conductive carbon tape. After this, a field emission scanning electron microscope was used. (FESEM) FEI Quanta FEG 250 model to take images with different magnifications.

From the result of this technique, the following photographs a, b, c and d in Figure 6 were obtained, which present graphite particles in the form of nanospheres and between 30 and 50 nm.

In addition, a laser diffraction study was carried out in which the particle size distribution of graphitic carbon of the present development was analyzed using Acetone-Ethanol 50:50 as a dispersant and sonicating the sample for 5 minutes at 60 hrz before starting the measurement. , representing the maximum diameter of 10%, 50% and 90% of the particles, in addition to the volume-weighted average D [4.3] µm. For this, a laser diffraction particle diameter analyzer (Mastersizer 3000, Malvern, Instruments, UK) was used, equipped with a liquid dispersion unit (HydroEV). The results are presented in the following table IV.

**Table IV**

| Equipment | Determined size |
|---|---|
| Dx10 | 14,0 ± 2,57 nm |
| Dx50 | 19,5 ± 3,82 nm |
| Dx90 | 36,6 ± 8,53 nm |
| Weighted volume average D[4.3] mm | 2,52 nm |

### c) Composition analysis

An analysis was carried out by means of energy dispersive X-ray spectroscopy (EDX), with a sample amount of 1 mg of the graphite of the present development where the analyzed sample gave the spectrogram shown in figure 7, where the results according to table V are:

**Table V:**

| Element | Weight % | Atomic % | Net Int. |
|---|---|---|---|
| Carbon | 92,66 | 94,62 | 768,08 |
| Oxygen | 6,88 | 5,28 | 14,61 |
| Nickel | 0,4 | 0,08 | 1,53 |
| Silicium | 0,06 | 0,03 | 0,99 |

### d) Degree of Crystallinity

A 50 mg sample of the graphite from the present development was taken, previously pulverized using a ball mill. The sample was placed in an alumina sample holder and measured with the X-ray powder diffraction technique. The diagram presented in figure 8 was obtained, where a diffraction peak at 25.92 degrees (2e) is clearly seen. However, several tests delivered a range of peaks between 24.5 and 26.3 degrees (2e). There is also a contamination peak at 44.5 degrees (2e) that corresponds to crystalline traces of the catalyst.

After this, different X-ray diffractions were compared for different carbon-based compounds, both from the protection process itself and from other sources (Figure 9).

Under them.

### e) Electrochemical performance button cell (half cell)

Finally, comparison tests are carried out on the electrochemical performance of the product of the present development in comparison with black carbon recovered from out-of-use tires. For this, 2.4 g of each of the previously mentioned products were taken and individual anodes were prepared as electrodes. working as follows. The active material of study was mixed with super P carbon (0.3 g) and PVDF (0.3 g) in proportions of 80:10:10 respectively in 15 mL of N-Methyl-2-Pyrrolidone (NMP) solvent. for 30 minutes at 4000 RPM using an IKA Ultra-turrax disperser. The resulting suspension was deposited on a copper current collector through the Doctor Blade technique. The deposited material was dried at 60 °C in an oven to evaporate all the solvent used. Finally, the electrodes were cut with a diameter of 16 mm and dried in a convection oven at 110 °C for 12 hours. The electrochemical behavior of the commercial materials and the graphite from rCB was evaluated in a half-cell configuration. This configuration consists of facing the study material against a metallic lithium disk with a diameter of 13 mm; Both electrodes were separated by a 16 mm diameter glass fiber Whatman filter impregnated with 1 M LiPF6 electrolyte in a mixture of ethylene carbonate:dimethyl carbonate:diethyl carbonate (EC:DMC:DEC 1:1:1 by volume). The cells used were of the button type model (CR2032) whose assembly was carried out in a glove chamber model TMAX GBP800S-2, maintaining an atmosphere free of humidity and with a high percentage of argon. The results of the average specific capacity and Coulombic efficiency tests are presented in the curves of figure 10, where it can be seen that: The average specific capacity is 400 mAh g-1, 0.1°C, 150 cycles. Coulombic efficiency is 95%.

In summary, the final 2.5 g sample obtained from clean graphitic carbon provided the following identification results, under the techniques described above:
Carbon: 92,76 % p/p
Oxygen: 6.88% w/w
Nickel: 0,3% p/p
Silicon: 0.06% w/w
Particle size between 30 - 50 nm
Nanospheres: 100%
Surface area 225.76 +/- 0.81 per iodine value.
X-ray diffraction (XRD) method Pick at 25.92, 2e and a second peak at 44.5, 2e related to contamination by the nickel catalyst.

Charging tests were also carried out to see how the anodic performance varies when the fourth stage of the present development of graphitization of rCB activated carbon impregnated with catalyst changes temperature, this can be seen in table VI:

**Table VI**

| Studied parameter | Graphite 1 (Synthesized at 800°C) | Graphite 2 (Synthesized at 900°C) | Graphite 3 (Synthesized at 1000°C) |
|---|---|---|---|
| Average specific discharge capacity | 242,3 mAh g⁻¹ | 308,2 mAh g⁻¹ | 386,3 mAh g⁻¹ |
| Specific charge capacity | 241,0 mAh g⁻¹ | 304,5 mAh g⁻¹ | 379,1 mAh g⁻¹ |

These measurements were carried out under all the chemical parameters and stages of the present development, only modifying the temperatures in the fourth stage.

Subsequently, different composition analyzes were carried out on different batches of clean graphitic carbon based on different sources of Carbon black, under the process described above, and the following chemical and physical results were delivered, respectively, of the product of the present development, as shown. see in tables VII and VIII:

**Table VII**

| ELEMENT | Graphite 1 | Graphite 2 | Graphite 3 | Graphite 4 |
|---|---|---|---|---|
| CARBON | 87,98 ± 0,12 % | 97,61 ± 0,35 % | 97,10 ± 1,04 % | 91,59 ± 1,42 % |
| OXYGEN | 9,45 ± 0,34 % | 0,55 ± 0,96 % | 2,75 ± 0,24% | 5,75 ± 1,07% |
| SILICIUM | 1,23 ± 0,1 % | 0,01 ± 0,02 % | 0,05 ± 0,04 % | 1,32 ± 0,08 % |
| POTASIUM | 0,1 ± 0,07 % | 0,06 ± 0,10 % | 0,01 ± 0,07 % | 0,1± 0,4 % |
| NICKEL | 1,24 ± 0,05 % | 1,77 ± 0,03 % | 0,09 ± 0,1 % | 1,24 ± 0,03 % |
| SULPHUR | 0.01 ± 0,05 % | 0.02 ± 0,03 % | 0.07 ± 0,03 % | 0.02 ± 0,01 % |

**Table VIII**

| Parameter studied | Graphite 1 | Graphite 2 | Graphite 3 | Graphite 4 |
|---|---|---|---|---|
| D1510-19: | 225,76 ± 0,81 g kg⁻¹ | 270,08 ± 0,28 g kg⁻¹ | 274,07 ± 1,07 g kg⁻¹ | 224,01 ± 2,19 g kg⁻¹ |
| DETERMINATION OF IODINE INDEX | | | | |
| Particle size | 30,2107 nm | 33,0428 nm | 40,1135 nm | 38,2017 nm |
| Degree of crystallinity | 55% | 88% | 87% | 70% |

## Claims

1. Process to obtain a composition of graphite carbon grade for metal ion battery from carbon black or other hard carbon of industrial origin, CHARACTERIZED because it includes the following stages:
i) obtaining recovered carbon black (rCB) from recycled tires;
ii) cleaning of recovered carbon black;
iii) activation of clean recovered black carbon;
iv) hydrothermal impregnation of the catalyst in the rCB activated carbon;
v) graphitization of rCB activated carbon impregnated with a catalyst; and
vi) cleaning graphite with catalyst recovery.

2. Process to obtain a composition of graphite, according to claim 1, CHARACTERIZED because obtaining the recovered carbon black (rCB) (i) comes from the pyrolysis of unused tires at low temperature.

3. Process to obtain a composition of graphite, according to claim 1, CHARACTERIZED because the recovered carbon black cleaning stage (ii) is separated into two substages:
(ii1) cleaning with a strong acid with a pH below 4, under ultrasonic conditions, then filtration and neutralization with a strong alkali with a pH above 9; and
(ii2) filtration and extraction with organic solvent.

4. Process to obtain a composition of graphite, according to claim 1, CHARACTERIZED because the activation stage of clean recovered carbon black (iii) comprises an initial chemical activation substage with an activating agent mixed with the grinding of the clean carbon black from stage (ii); then another substage of heat treatment in a muffle at temperatures between 600-900°C for 0.5-3 hours in atmosphere inert; and finally a wash with strong acid, ultrasound, deionized water and drying at 110°C.

5. Process to obtain a composition of graphite, according to claim 4 CHARACTERIZED because the activation stage of clean recovered black carbon (iii), the activating agents used are selected from a group such as H₃PO₄, H₂S, H₂SO₄, H₂SO₃, KOH, NaOH, LiOH, in a ratio of 1:1.

6. Process to obtain a composition of graphite, according to claim 1, CHARACTERIZED because the activation stage of clean recovered black carbon (iii), alternatively, comprises a physical activation substage that is developed through a thermal treatment in a muffle up to 800°C for 1 hour, with a constant flow of water vapor in an inert atmosphere.

7. Process to obtain a composition of graphite, according to claim 1, CHARACTERIZED because the step of hydrothermal impregnation of the catalyst in the rCB activated carbon (iv), comprises the impregnation of an aqueous solution with a catalyst in the rCB activated carbon particles through a hydrothermal treatment in a reactor at a temperature between 100 to 160 °C, for 1 to 12 hours, where the carbon is then filtered and dried in an oven, recovering the aqueous solution with the catalyst.

8. Process to obtain a composition of graphite, according to claim 7, CHARACTERIZED because the catalyst is selected from Ni (NO₃)₂, Fe(NO₃)₃, Co(NO₃)₂, NiCl₂, FeCl₃, CoCl₂, and is used in an aqueous solution with a concentration ranging from 0.01 to 0.25 M.

9. Process to obtain a composition of graphite, according to claim 1, CHARACTERIZED because the graphitization stage (v) comprises a thermal treatment in the absence of oxygen, where the carbon, previously impregnated with catalyst in stage (iv), is introduced into a muffle furnace with atmosphere control at a temperature between 800 and 1500 °C for between 3 and 10 hours, using a ramp of 1 to 5 °C per minute to reach the treatment temperature, using a constant flow of atmosphere inert.

10. Process to obtain a composition of graphite, according to claim 1, CHARACTERIZED because the final cleaning stage for the removal and recovery of the catalyst (vi), where the graphitic carbon is mixed in a 1:10 ratio with a strong acid under stirring and constant ultrasound, to achieve leaching and removal of the catalyst, then the product is filtered and neutralized with a solution of strong alkali and deionized water, finally, the clean graphitic carbon is dried, and the catalyst is recovered from the leachate solution.

11. Composition of graphite grade for metal ion battery, CHARACTERIZED because it includes the following elements and particularities:
crystalline graphite with an X-ray diffraction signal or peak between 24.5 and 26.3 degrees (2θ);
particle size 20-70 nm in the form of nanospheres;
iodine adsorption number of 200-300 ppm with a BET surface area of 200 - 1000 m2/g;
because the composition also includes:
Carbon 85 - 99%
Oxygen 0.1 - 10%
Silicon 0.01 - 1.5%
Potassium 0.01 - 0.15%
Nickel 0.07 - 1.9%
Sulfur 0.01 - 0.05%

12. Use of the composition of graphite grade for metal ion battery, CHARACTERIZED because it is used for the manufacture of batteries in the form of an anode.

13. Use of the composition of graphite grade for metal ion battery, according to claim 12, CHARACTERIZED because the metal ion battery is a battery with a lithium salt cathode.

14. Use of the composition of graphite grade for metal ion battery, according to claims 12 and 13, CHARACTERIZED because the lithium ion battery with an anode composed of the composition described in claim 11, comprises a specific electrical capacity of 400-450 mAh g-1(0.1C, 150 cycles) and Coulombic efficiency of 95-98%.
